Europäisches Patentamt

European Patent Office

Office européen des brevets

(11) Publication number: 0 358 414
A2

# EUROPEAN PATENT APPLICATION

(21) Application number: 89308873.2

(51) Int. Cl.5: G02F 1/01

(22) Date of filing: 01.09.89

(30) Priority: 03.09.88 GB 8821688

(43) Date of publication of application:
14.03.90 Bulletin 90/11

(84) Designated Contracting States:
DE FR IT

(71) Applicant: GEC-Marconi Limited
The Grove Warren Lane
Stanmore Middlesex HA7 4LY(GB)

(72) Inventor: Young, Terence Paul
31 Rothman's Avenue Great Baddow
Chelmsford
Essex CM2 9UE(GB)
Inventor: Davies, Nicholas Arthur
6 Kingfisher Close Heybridge Maldon
Essex CM9 7UF(GB)
Inventor: Wisbey, Philip Henry
Matlock House 46 Wimpole Road Colchester
Essex(GB)

(74) Representative: Loven, Keith James et al
GEC plc Patent Dept.(Chelmsford Office)
GEC-Marconi Research Centre West
Hanningfield Road
Great Baddow Essex CM2 8HN(GB)

(54) Optical waveguide.

(57) A smoothing layer is provided between the rough etched sides of a channel in a substrate in which an optical waveguiding material is to be produced. Losses are substantially reduced thereby. For a rectangular or rib waveguide, where the sides of the rib are left rough by etching, a smoothing layer is again provided over the rib. The smoothing layer preferably has a refractive index close to or the same as the materials having surface roughness.

FIG.2.

## OPTICAL WAVEGUIDE

This invention relates to an optical waveguide and to methods of forming optical waveguides.

An optical waveguide is an elongate structure providing two-dimensional confinement of light in its transverse plane.

Electro-optically active polymers show great potential for making high speed integrated optical modulators and switches. In a high speed optical modulator, for example, an electrode structure is included which normally supports a microwave mode. This mode will ideally travel collinearly with the optical signal, yielding an electro-optically induced phase advance or retardation with distance.

In making polymer waveguides for integrated optical modulators, for example, one of the main loss mechanisms is side wall roughness. Surface roughness due to the etching techniques used to define the waveguide structure typically have RMS standard deviations of a few to a few hundred nanometres.

For example, where the waveguide is formed by producing a channel in a substrate by processes such as reactive ion etching, with the active polymer then being provided in the channel, the etching processes leave a rough side wall finish. This is also true for multi-layer polymer structures where some etchant or solvent is used to cut through one layer in the waveguide region. Such layers are typically fabricated by dip or spin coating.

The present invention provides, in one aspect, an optical waveguide, comprising an elongate body of an active waveguiding material of first refractive index surrounded by material of lower refractive index, and a smoothing layer. between at lease a portion of the surface of the elongate body and the surrounding material, the smoothing layer being such as to produce an interface of substantially reduced roughness between the material of first refractive index and material having a lower refractive index.

At least part of the elongate body of waveguiding material may be located in a channel defined by material of lower refractive index, or it may be located on a substrate, with the material of lower refractive index forming a coating layer over the body.

Another aspect of the invention provides a method of forming an optical waveguide, comprising forming a channel in a substrate, providing a smoothing layer on at least a portion of the walls of the channel, thereby substantially reducing the surface roughness of the walls, and filling the channel with a waveguiding medium having a higher refractive index than those of the smoothing layer and the substrate.

A further aspect of the invention provides a method of forming an optical waveguide, comprising forming an elongate body of waveguiding material on a substrate, providing a smoothing layer on the body, thereby substantially reducing the roughness of the surface of the body, the smoothing layer having a refractive index substantially equal to that of the body, and coating the body with a layer of a material having a lower refractive index than that of the body.

The smoothing layer is preferably very thin, and may be provided by spin coating with a polymer solution. Ideally, the thickness of the smoothing layer is sufficient to fill the microscopic roughnesses of the side walls, while being substantially smaller than the cross-sectional dimensions of the waveguide. A substantial reduction in signal losses along the waveguide maybe achieved by the use of the smoothing layer in accordance with the invention.

Reference is made to the drawings, in which:

Figure 1 is a schematic sectional elevation of a waveguide according to one embodiment of the invention;

Figure 2 is a perspective view, on an enlarged scale, of a section of the waveguide shown in Figure 1;

Figure 3 is a schematic sectional elevation of a waveguide according to another embodiment of the invention; and

Figure 4 is a perspective view, on an enlarged scale, of a section of the waveguide illustrated generally in Figure 3.

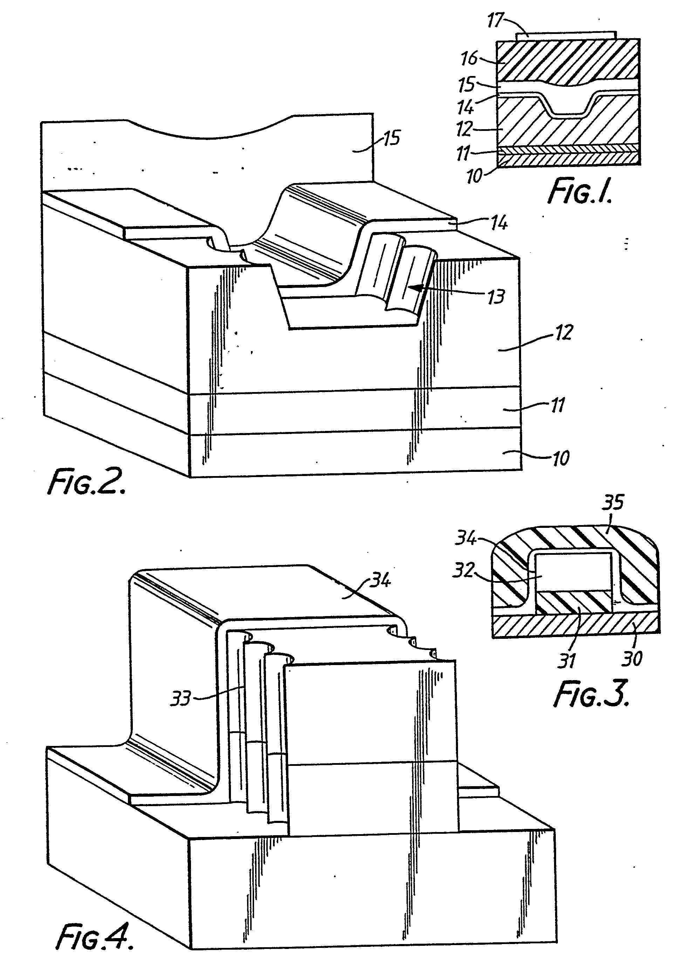

Figure 1 illustrates an inverted rib waveguide comprising a substrate 10, which may have an overlying electrode layer 11, for example of gold, and a buffer layer 12 having a refractive index $n_2$. The buffer layer 12 is formed by growing a crystalline body of silicon oxynitride (SiON). A channel 13 (Figure 2) is formed in the buffer layer 12 reactive ion etching to a suitable depth, the dimensions of the channel being such that the waveguide formed therein gives a single mode structure. The etching leaves roughness, particularly on the walls of the channel 13, shown in exaggerated form in Figure 2. A smoothing layer 14 is formed on the surface of the buffer layer 12 by spin or dip coating of a solution of a polymer having a refractive index as close as possible to the refractive index $n_2$ of the buffer layer. A solution of 5% by weight of polyvinyl benzyl chloride in toluene may be used for the dip coating. The layer is cured by baking at 140°C in vacuo for 16 hours, followed by a further hour at 200°C.

A layer 15 of active waveguiding polymeric material is then coated onto the surface of the smoothing layer. The material of this layer 15 has a higher refractive index $n_1$ than the refractive index of the buffer layer $n_2$. Finally, as may be seen from Figure 1, a further buffer layer 16 of polymeric material is provided over the layer of the active waveguiding material 15. This further buffer layer has a lower refractive index $n_3$ which may be close to that of the first buffer layer 12. A second electrode layer 17 can be provided on top of the buffer layer 16. It will be appreciated that the first buffer layer 12 could also be formed of a polymeric material, in which case the smoothing layer may be of a material which can be coated on to the buffer layer without substantial dissolution thereof. Where the polymeric buffer layer can be subjected to a suitable curing process to minimise dissolution effects, the smoothing layer may comprise the same polymer as is used to form the buffer layer.

Referring now to Figures 3 and 4, a rib or rectangular waveguide is formed on a substrate 30 by first providing a buffer layer 31 of a polymeric material having a refractive index $n_2$ on the substrate by spin or dip coating. A layer of active waveguiding polymeric material 32 is then provided over the buffer layer 31, again suitably by spin or dip coating. A protective layer is then formed on the surface of the active material 32 in those areas where the waveguide is to be formed. This may suitably be achieved photolithographically. The material other than where protected by the protective layer is then removed by etching or dissolution, and the protective layer can then itself be removed. This then leaves a rib having surface roughness on the side wall shown in exaggerated form at 33 in Figure 4. Other fabrication techniques may also be used to form this structure. A smoothing layer 34 of the active waveguiding polymeric material is then provided over the whole of the structure by, for example, spin coating, followed by curing. The layer 34 is thicker than the RMS surface roughness of the side walls, but has a thickness substantially smaller than the cross-sectional dimensions of the waveguide. The smoothing layer 34 may alternatively be formed from a different material to the active material 32, but having a refractive index as close as possible to that of the active material. Finally, the layer 35 of polymeric material having the lower refractive index $n_2$ is provided over the whole of the rib. Thus, the transition between the material of refractive index $n_1$ and the material of refractive index $n_2$ is reduced.

## Claims

1. An optical waveguide, comprising an elongate body of an active waveguiding material of first refractive index surrounded by material of lower refractive index, and a smoothing layer between at least a portion of the surface of the elongate body and the surrounding material, the smoothing layer being such as to produce an interface of substantially reduced roughness between the material of first refractive index and material having a lower refractive index.

2. An optical waveguide according to claim 1, wherein at least a part of the body of waveguiding material is located in a channel defined by material of lower refractive index.

3. An optical waveguide according to claim 2, wherein the smoothing layer has a refractive index substantially equal to that of the adjacent material of lower refractive index.

4. An optical waveguide according to claim 1, wherein the body of waveguiding material is located on a substrate, and the material of lower refractive index forms a coating layer over said body.

5. An optical waveguide according to claim 4, wherein the smoothing layer has a refractive index substantially equal to that of the waveguiding material.

6. An optical waveguide according to claim 5, wherein the smoothing layer is formed from the same active waveguiding material as the elongate body.

7. A method of forming an optical waveguide, comprising forming a channel in a substrate, providing a smoothing layer on at least a portion of the walls of the channel, thereby substantially reducing the surface roughness of the walls, and filling the channel with a waveguiding medium having a higher refractive index than those of the smoothing layer and the substrate.

8. A method according to claim 7, wherein the smoothing layer has a refractive index substantially equal to that of the substrate.

9. A method according to claim 7 or 8, wherein the channel is formed by etching the substrate.

10. A method of forming an optical waveguide, comprising forming an elongate body of waveguiding material on a substrate, providing a smoothing layer on the body, thereby substantially reducing the roughness of the surface of the body, the smoothing layer having the refractive index substantially equal to that of the body, and coating the body with a layer of a material having a lower refractive index than that of the body.

11. A method according to claim 10, wherein the elongate body is formed from a layer of waveguiding material by etching away undesired material from the sides of the body.

12. A method according to claim 10 or 11, wherein the smoothing layer is formed from the same active waveguiding material as the elongate body.

Fig.1.

Fig.2.

Fig.3.

Fig.4.